# EUROPÄISCHE PATENTSCHRIFT

(11) **EP 2 700 612 B1**
(45) Veröffentlichungstag und Bekanntmachung des Hinweises auf die Patenterteilung: **11.05.2016**
(21) Anmeldenummer: 13179419.0
(22) Anmeldetag: 06.08.2013
(51) Int. Cl.: B66F 9/075, B66F 17/00, B60Q 1/50

(54) **Flurförderzeug mit einer Warnvorrichtung**
Industrial truck comprising a warning device
Chariot de manutention comprenant un dispositif d'avertissement

(30) Priorität: 22.08.2012 DE 102012107704
(43) Veröffentlichungstag der Anmeldung: 26.02.2014
(73) Patentinhaber: STILL GmbH, 22113 Hamburg (DE)
(72) Erfinder: Strugg, Gerald, 22083 Hamburg (DE)
(74) Vertreter: Geirhos, Johann

(56) Entgegenhaltungen:
- WO-A1-2011/109897
- DE-A1-102006 002 960
- DE-B- 1 230 325
- JP-A- 2001 199 276
- US-A1- 2009 013 922

## Beschreibung

Die Erfindung betrifft ein Flurförderzeug mit einer Warnvorrichtung. Insbesondere betrifft die Erfindung ein Flurförderzeug mit einer Warnvorrichtung, die an dem Flurförderzeug angeordnet einen Lichteffekt auf die Fahrbahn projizieren kann.

Flurförderzeuge sind beispielsweise in Ausführungsformen als Gegengewichtsgabelstapler, Schubmaststapler sowie Lagertechnikgeräte bekannt. Insbesondere diese drei Arten von Flurförderzeugen werden in großem Umfang auf Betriebsgeländen und in Lagerbereichen eingesetzt, in denen sich auch Personen aufhalten, während gleichzeitig die Sichtverhältnisse durch Lagerregale und eingelagerte Lasten sowie die räumlichen Umstände eingeschränkt sind. Es ist bekannt, als Warneinrichtung vor herannahenden Flurförderzeugen optische Warneinrichtungen an den Flurförderzeugen vorzusehen, die die Aufmerksamkeit der Personen in der Umgebung erregen sollen. Eine seit langem bekannte und weit verbreitete Lösung hierfür sind rotierende Rundumleuchten oder blinkende Leuchten, die im oberen Bereich oder an einem Fahrschutzdach der Flurförderzeuge angeordnet sind, häufig als gelbe Warnleuchten.

Nachteilig an diesem Stand der Technik ist, dass solche Leuchten aufgrund der oftmals großen Anzahl an gleichzeitig fahrenden Flurförderzeugen sowie der nicht auf einen bestimmten Gefahrenbereich, beispielsweise in Bewegungsrichtung vor dem Flurförderzeug, beschränkten Warnung zu einem Gewöhnungseffekt und der Gefahr der Nichtbeachtung führen. Auch wird ein andauernd vorhandenes, blinkendes Licht, das möglicherweise noch über Reflexionen ständig in allen Bereichen eines Lagers wahrnehmbar ist, oftmals als unangenehm empfunden und führt zu Akzeptanzproblemen.

In dem Stand der Technik, beispielsweise aus der DE 10 2006 002 960 A1, ist ein Flurförderzeug mit einer optischen Warnvorrichtung bekannt, bei dem ein in Fahrtrichtung weisender Lichteffekt als Sicherheitslicht auf die Fahrbahn projiziert wird, um Personen in der Umgebung vor dem herannahenden Flurförderzeug zu warnen. Dadurch kann beispielsweise in geräuschintensiven Umgebungen vor einem herannahenden Flurförderzeug gezielt gewarnt werden, wobei das Sicherheitslicht meist in einem fest eingestellten Abstand vor dem Flurförderzeug und/oder auch hinter dem Flurförderzeug, für den Fall der Rückwärtsfahrt, auf die Fahrbahn projiziert wird. In einer Ausführungsform ist aus der DE 10 2006 002 960 A1 eine Ausführungsform bekannt, bei der das Sicherheitslicht in einem von der Fahrgeschwindigkeit des Flurförderzeugs abhängigen und mit zunehmender Fahrgeschwindigkeit sich vergrößernden Abstand auf die Fahrbahn projiziert wird. Eine sich bildende Projektionsfläche des Sicherheitslichts auf der Fahrbahn ist dabei fleckenförmig bzw. im angestrebten Idealfall möglichst kreis- oder ellipsenförmig.

Nachteilig an diesem aus dem Stand der Technik bekannten optischen Warnvorrichtungen ist, dass eine zu warnende Personen von der herannahenden Gefahrenquelle abgelenkt werden könnte, da die Fleckenform der Projektionsfläche keinen Hinweis auf eine Richtung gibt oder ein Richtungsgefühl vermittelt. Bewegt sich ein Flurförderzeug beispielsweise auf eine Person in Bezug auf deren Blickrichtung von der linken Seite kommend zu, so sieht die Person das Sicherheitslicht von links nach rechts wandern und folgt diesem oftmals intuitiv mit dem Blick. Wenn jedoch die Aufmerksamkeit mit der Bewegungsrichtung des Sicherheitslichts gelenkt wird, so kommt die Gefahr typischerweise entgegen dieser Bewegungsrichtung mit dem Flurförderzeug.

Aus der DE 12 30 325 B ist ein Projektionsgerät für ein Fahrzeug, insbesondere Straßenfahrzeug, bekannt, bei dem ein seitlicher Abstand zu dem Fahrzeug durch ein Lichtsignal markiert werden kann, um bei der Fahrt den Seitenabstand einzuhalten. Diese Markierung kann beispielsweise ein in Fahrtrichtung zeigender Pfeil sein.

Der Erfindung liegt daher die Aufgabe zu Grunde, eine Warnvorrichtung für ein Flurförderzeug sowie ein Flurförderzeug zur Verfügung zu stellen, mit denen die Warnfunktion für Personen in der Umgebung des Flurförderzeugs verbessert wird.

Diese Aufgabe wird durch ein Flurförderzeug mit einer Warnvorrichtung mit den Merkmalen des Patentanspruchs 1 gelöst. Vorteilhafte Weiterbildungen und Ausgestaltungen der Erfindung sind in den Unteransprüchen angegeben.

Die Aufgabe wird gelöst durch ein Flurförderzeug mit einem Warnvorrichtung, die an dem Flurförderzeug angeordnet, einen Lichteffekt auf die Fahrbahn projizieren kann, wobei der Lichteffekt eine Projektionsfläche aufweist, deren Form einen Richtungshinweis in Richtung auf das Flurförderzeug gibt.

Vorteilhaft wird dadurch die Aufmerksamkeit einer Person in der Umgebung des Flurförderzeugs, wenn sich das Flurförderzeug annähert, nicht von diesem weg gelenkt, sondern auf das Flurförderzeug hin gelenkt, von dem mögliche Gefahren ausgehen können. Dabei kann der Richtungshinweis in jeder denkbaren Form ausgebildet sein, die Personen bekannt ist, um in eine Richtung hinzuweisen. Insbesondere geometrische Figuren, die sich auf Richtung des Flurförderzeugs in der Breite verjüngen sind hierbei denkbar. Ebenfalls möglich sind beispielsweise mehrfach angeordnete Bilder, die identisch sind, jedoch in der Größe kleiner werdend, wodurch für einen Betrachter ein Reiz besteht, diesen sich verkleinernden Bildern zu folgen. Vorteilhaft wird eine Person schneller und richtiger reagieren können, da das herannahende Flurförderzeug schneller erfasst wird, wenn der Blick zu diesem hin gelenkt wird. Die Warnvorrichtung ist sehr kostengünstig sowie einfach umzusetzen und kann leicht an einem Flurförderzeug im Rahmen einer nachträglichen Nachrüstung angebracht werden.

In vorteilhafter Ausgestaltung der Erfindung ist die Form der Projektionsfläche pfeilförmig und weist die Pfeilspitze auf das Flurförderzeug.

Durch einen Pfeil und somit ein entsprechendes Pfeilsymbol wird sehr einfach und deutlich die Richtung angegeben, in der sich das Flurförderzeug befindet. Dabei sind auch Pfeilformen denkbar, die allein aus der Pfeilspitze bestehen oder etwa aus zwei dachförmig zulaufenden Linien.

Insbesondere kann die Projektionsfläche als Pfeilspitze allein aus einem Dreieck gebildet sein, das beispielsweise vollflächig oder allein durch Linien ausgeführt ist. Dabei kann durch eine auf das Flurförderzeug weisende Spitze des Dreiecks der Richtungshinweis erfolgen. Indem das Dreieck ein ungleichseitiges Dreieck ist, kann diese Spitze besonders betont werden.

Es ist auch möglich, die Projektionsfläche allein aus einer Pfeilspitze dadurch zu bilden, dass zwei dachförmig zulaufende Linien auf das Flurförderzeug zeigen.

Vorteilhaft entspricht die Form der Projektionsfläche einer Konturlinie der Vorderseite oder der Rückseite des Flurförderzeugs.

Die Außenkonturlinie eines Flurförderzeugs ist den sich im Lagerbereich bewegenden Personen bekannt, insbesondere die Vorderseite mit einer eventuellen Lastaufnahmevorrichtung. Es ergibt sich somit ein klarer Hinweis, dass hinter dieser sich bewegenden Linie ein Flurförderzeug folgt und zugleich aus welcher Richtung das Flurförderzeug kommt.

Die Form der Projektionsfläche kann einer verkleinerten Umrissdarstellung des Flurförderzeugs entsprechen.

In einer Weiterbildung ist die Umrissdarstellung eine Aufsicht von oben, insbesondere eines Gabelstaplers mit nach vorne gerichteten Lastgabeln.

Die Umrissdarstellung kann eine Seitenansicht sein, insbesondere eines Gabelstaplers mit nach vorne gerichteten Lastgabeln.

Indem sozusagen eine miniaturisierte Darstellung eines Flurförderzeugs dem Flurförderzeug vorauseilt, erfolgt eine besonders intuitive Warnung für Personen in der Umgebung, die diese Darstellung erblicken. Dabei wird auch intuitiv klar, woher das Flurförderzeug kommt und wird ein Richtungshinweis gegeben. Insbesondere wenn im Beispielsfall eines Gabelstaplers eine Darstellung mit den Gabelzinken erfolgt, ist eindeutig, in welche Richtung sich das Fahrzeug bei unterstellter Vorwärtsfahrt bewegt und sich in Bezug auf die Projektionsfläche befindet. Da in einer Seitenansicht auch Fahrerkabine und Hubmast beispielsweise bei einem Gabelstapler dargestellt werden können, ist diese Darstellung noch schneller und leichter zu erfassen.

Grundsätzlich ist es auch möglich, alle zuvor beschriebenen Elemente jeweils einzeln miteinander zu kombinieren. So kann beispielsweise ein Flurförderzeug, bzw. Gabelstapler, in Seitenansicht auf einem Pfeil angeordnet werden, der die Bewegungsrichtung des Gabelstaplers angibt. So kann ein miniaturisierter Gabelstapler vor dem Fahrzeug auf einem in Richtung der Lastgabel zeigenden Pfeil fahren dargestellt sein, und eine entsprechende Darstellung hinter dem Fahrzeug einen zum Heckgewichts des miniaturisiert dargestellten Gabelstaplers zeigenden Pfeil zeigen.

In einer günstigen Weiterbildung der Erfindung entspricht die Form der Projektionsfläche den Konturlinien von Gabelzinken einer Lastgabel.

Insbesondere eine Lastgabel ist eine sehr markante Kontur, die schnell eindeutig erkannt wird und intuitiv auf eine herannahende Gefahr durch das Flurförderzeug hinweist.

Der Lichteffekt kann durch einen Laser erzeugt werden.

Laser mit ihrem gebündelten Licht stehen einerseits als kostengünstige Bauelemente in Form von Laserdioden zur Verfügung und können andererseits dazu genutzt werden, bestimmte Linienmuster oder Konturen durch Bewegen des Lasers bzw. von Spiegelelementen darzustellen.

In einer günstigen Ausgestaltung der Erfindung wird die Form der Projektionsfläche durch eine Blende und/oder ein Linsensystem und/oder einen entsprechend geformten Reflektor eines Scheinwerfers erzeugt.

Es ist auch möglich, die Form der Projektionsfläche durch Ätzungen in einem Linsensystem oder Scheinwerferglas zu erreichen. Ebenso kann auch durch die Form von Leuchtdioden die Form der Projektionsfläche festgelegt werden.

Die Form der Projektionsfläche kann durch eine Mehrzahl von Lichtquellen und deren Anordnung erzeugt werden, insbesondere durch eine Mehrzahl von Leuchtdioden.

Es ist auch beispielsweise möglich, mehrere Leuchtdioden ungefähr pfeilförmig anzuordnen und zusätzlich eine Blende vorzusehen.

Die Form der Projektionsfläche kann durch eine wiederholte Abfolge einer Verkürzung des Abstands relativ zu der Warnvorrichtung bestimmt werden.

Dabei kann sich beispielsweise eine Abfolge von Formen wie in einer Art Band auf das Flurförderzeug zu bewegen und der Effekt, dass ein Betrachter intuitiv der Bewegungsrichtung eines Lichtflecks folgt, wird vorteilhaft genutzt, um gerade gegen die Fahrtrichtung des Flurförderzeugs auf das Flurförderzeug hinzuweisen. Es kann sich dabei auch um einen einzelnen Lichtfleck handeln, der in endlose Abfolge immer wieder eine kurze Wegstrecke auf das Flurförderzeug zu bewegt wird. Die Projektionsfläche kann eine Art "Lichtwelle" darstellen, bei der in zeitlicher und/oder räumlicher Modulation des Lichts die Aufmerksamkeit entgegen der Bewegungsrichtung des Flurförderzeugs gelenkt wird. Es ist grundsätzlich denkbar, eine Gestaltung der Form der Projektionsfläche durch eine wiederholte Abfolge einer Verkürzung des Abstands relativ zu der Warnvorrichtung als einzigen Richtungshinweis unabhängig von einer Geometrie vorzusehen.

In einer Weiterbildung der Erfindung kann die Projektionsfläche in mehreren Abständen zu dem Flurförderzeug auf der Fahrbahnfläche fokussierbar sein.

Beispielsweise ist es denkbar, mit zunehmender Geschwindigkeit den Abstand zu dem Flurförderzeug zu vergrößern. Vorteilhaft wird dadurch die Vorwarnzeit, bis das Flurförderzeug herangekommen ist, bei einem schneller fahrenden Flurförderzeug vergrößert bzw. gleich gehalten. Daneben oder alternativ wäre es auch denkbar, die Größe der Projektionsfläche zu ändern.

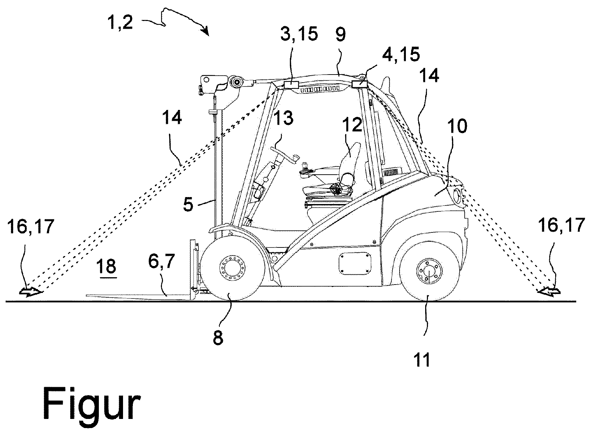

Weitere Vorteile und Einzelheiten der Erfindung werden anhand des in der Figur geschilderten Ausführungsbeispiels näher erläutert. Hierbei zeigt die Figur eine schematische Darstellung eines erfindungsgemäßen Flurförderzeugs mit einer Warnvorrichtungen in Seitenansicht.

Die Figur zeigt eine schematische Darstellung eines erfindungsgemäßen Flurförderzeugs 1, hier beispielsweise eines Gegengewichtsgabelstaplers 2, mit einer ersten, vorne angeordneten Warnvorrichtung 3 und/oder einer hinten angeordneten zweiten Warnvorrichtung 4 in Seitenansicht.

Der Gegengewichtsgabelstapler 2 weist eine an einem Hubmast 5 geführte Lasthandhabungsvorrichtung 6 in Form einer von zwei Gabelzinken gebildeten Lastgabel 7 auf. Der Hubmast 5 ist über einer Vorderachse mit Vorderrädern 8 angeordnet, über die der Gegengewichtsgabelstapler 2 angetrieben wird. Hinter dem Hubmast 5 befindet sich ein Fahrerschutzdach 9 und hinter dem Fahrerschutzdach 9 ein Gegengewicht 10. Unterhalb des Gegengewichts 10 befinden sich gelenkte Hinterräder 11, mit denen der Gegengewichtsgabelstapler 2 gelenkt wird. Unterhalb des Fahrerschutzdaches 9 ist ein Fahrersitz 12 mit einem Lenkrad 13 angeordnet.

Die erste, vordere Warnvorrichtung 3, wie auch die zweite, hintere Warnvorrichtung 4 sind an dem Fahrerschutzdach 9 angeordnet und senden Laserlicht 14 eines jeweiligen Lasers 15 oder gebündeltes Licht einer Lichtquelle als Lichteffekt aus, durch das eine Projektionsfläche 16 in Pfeilform 17 auf die Fahrbahn 18 projiziert wird, wobei die Pfeilform 17 und somit das Pfeilsymbol in Richtung auf das Flurförderzeug 1 weist.

Wenn sich das Flurförderzeug 1 in Vorwärtsfahrt oder in Rückwärtsfahrt befindet, so wird eine Person in der Umgebung des Flurförderzeugs 1, wenn sich dieses annähert, die Pfeilform 17 der Projektionsfläche 16 bemerken, durch die auf die Richtung hingewiesen wird, aus der sich das Flurförderzeug 1 annähert. Durch die solcherart auf das Flurförderzeug 1 gelenkte Aufmerksamkeit wird eine Person in der Umgebung des Flurförderzeugs 1 schneller gewarnt, wenn das Flurförderzeug 1 sich annähert.

Die Erfindung ist nicht auf das hier geschilderte Beispiel eines Gegengewichtsgabelstaplers 2 als Flurförderzeug 1 beschränkt und kann bei allen Arten von Flurförderzeugen angewandt werden.

## Patentansprüche

1. Flurförderzeug mit einer Warnvorrichtung , die an dem Flurförderzeug (1) angeordnet einen Lichteffekt auf die Fahrbahn (18) projizieren kann,
**dadurch gekennzeichnet,**
**dass** der Lichteffekt eine Projektionsfläche (16) aufweist, deren Form einen Richtungshinweis in Richtung auf das Flurförderzeug gibt.

2. Flur förderzeug nach Anspruch 1,
**dadurch gekennzeichnet,**
**dass** die Form der Projektionsfläche (16) pfeilförmig (17) ist und die Pfeilspitze auf das Flurförderzeug (1) weist.

3. Flurförderzeug nach Anspruch 1 oder 2,
**dadurch gekennzeichnet,**
**dass** die Projektionsfläche aus einer Pfeilspitze allein, insbesondere einem Dreieck besteht.

4. Flurförderzeug Anspruch 3,
**dadurch gekennzeichnet,**
**dass** die Projektionsfläche aus einem ungleichseitigen Dreieck besteht.

5. Flurförderzeug nach Anspruch 3 oder 4,
**dadurch gekennzeichnet,**
**dass** die Projektionsfläche aus zwei dachförmig zulaufenden Linien besteht.

6. Flurförderzeug nach einem der Ansprüche 1 bis 5,
**dadurch gekennzeichnet,**
**dass** die Form der Projektionsfläche (16) einer Konturlinie der Vorderseite oder der Rückseite des Flurförderzeugs (1) entspricht.

7. Flurförderzeug nach einem der Ansprüche 1 bis 6,
**dadurch gekennzeichnet,**
**dass** die Form der Projektionsfläche einer verkleinerten Umrissdarstellung des Flurförderzeugs entspricht.

8. Flurförderzeug nach Anspruch 7,
**dadurch gekennzeichnet,**
**dass** die Umrissdarstellung eine Aufsicht von oben ist, insbesondere eines Gabelstaplers mit nach vorne gerichteten Lastgabeln.

9. Flurförderzeug nach Anspruch 7,
**dadurch gekennzeichnet,**
**dass** die Umrissdarstellung eine Seitenansicht ist, insbesondere eines Gabelstaplers mit nach vorne gerichteten Lastgabeln.

10. Flurförderzeug nach einem der Ansprüche 1 bis 9,
**dadurch gekennzeichnet,**
**dass** die Form der Projektionsfläche (16) der Konturlinien von Gabelzinken einer Lastgabel entspricht.

11. Flurförderzeug nach einem der Ansprüche 1 bis 10,
**dadurch gekennzeichnet,**
**dass** der Lichteffekt durch einen Laser (15) erzeugt wird.

12. Flurförderzeug nach einem der Ansprüche 1 bis 11,
**dadurch gekennzeichnet,**
**dass** die Form der Projektionsfläche durch eine Blende und/oder ein Linsensystem und/oder einen entsprechend geformten Reflektor eines Scheinwerfers erzeugt wird.

13. Flurförderzeug nach einem der Ansprüche 1 bis 12,
**dadurch gekennzeichnet,**
**dass** die Form der Projektionsfläche durch eine Mehrzahl von Lichtquellen und deren Anordnung erzeugt wird, insbesondere durch eine Mehrzahl von Leuchtdioden.

14. Flurförderzeug nach einem der Ansprüche 1 bis 13,
**dadurch gekennzeichnet,**
**dass** die Form der Projektionsfläche durch eine wiederholte Abfolge einer Verkürzung des Abstands relativ zu der Warnvorrichtung bestimmt wird.

15. Flurförderzeug nach einem der Ansprüche 1 bis 14,
**dadurch gekennzeichnet,**
**dass** die Projektionsfläche (16) in mehreren Abständen zu dem Flurförderzeug (1) auf der Fahrbahnfläche (18) fokussierbar ist.

## Claims

1. Industrial truck having a warning device which is arranged on the industrial truck (1) and can project a light effect onto the underlying surface (18),
**characterized**
**in that** the light effect has a projection area (16) whose shape provides a directional information in the direction of the industrial truck.

2. Industrial truck according to Claim 1,
**characterized**
**in that** the shape of the projection area (16) is arrow-shaped (17), and the tip of the arrow points towards the industrial truck (1).

3. Industrial truck according to Claim 1 or 2,
**characterized**
**in that** the projection area is composed solely of a tip of an arrow, in particular of a triangle.

4. Industrial truck according to Claim 3,
**characterized**
**in that** the projection area is composed of a non-equilateral triangle.

5. Industrial truck according to Claim 3 or 4,
**characterized**
**in that** the projection area is composed of two lines which run together in the form of a roof.

6. Industrial truck according to one of Claims 1 to 5,
**characterized**
**in that** the shape of the projection area (16) corresponds to a contour line of the front side or of the rear side of the industrial truck (1).

7. Industrial truck according to one of Claims 1 to 6,
**characterized**
**in that** the shape of the projection area corresponds to a reduced representation of the outline of the industrial truck.

8. Industrial truck according to Claim 7,
**characterized**
**in that** the representation of the outline is a plan view from above, in particular of a fork-lift truck with load forks directed forwards.

9. Industrial truck according to Claim 7,
**characterized**
**in that** the representation of the outline is a side view, in particular of a fork-lift truck with load forks directed forwards.

10. Industrial truck according to one of Claims 1 to 9,
**characterized**
**in that** the shape of the projection area (16) corresponds to the contour lines of fork prongs of a load fork.

11. Industrial truck according to one of Claims 1 to 10,
**characterized**
**in that** the light effect is generated by a laser (15) .

12. Industrial truck according to one of Claims 1 to 11,
**characterized**
**in that** the shape of the projection area is generated by a shutter and/or a lens system and/or a correspondingly shaped reflector of a headlight.

13. Industrial truck according to one of Claims 1 to 12,
**characterized**
**in that** the shape of the projection area is generated by a multiplicity of light sources and the arrangement thereof, in particular by a multiplicity of light-emitting diodes.

14. Industrial truck according to one of Claims 1 to 13,
**characterized**
**in that** the shape of the projection area is determined by a repeated sequence of shortening of the distance from the warning device.

15. Industrial truck according to one of Claims 1 to 14,
**characterized**
**in that** the projection area (16) can be focussed on the underlying surface (18) at a plurality of distances from the industrial truck (1).

## Revendications

1. Chariot de manutention comportant un dispositif d'avertissement qui, disposé sur le chariot de manutention (1), peut projeter un effet de lumière sur la chaussée (18), **caractérisé en ce que** l'effet de lumière présente une surface de projection (16) dont la forme donne une indication de direction dans la direction du chariot de manutention.

2. Chariot de manutention selon la revendication 1, **caractérisé en ce que** la forme de la surface de projection (16) présente la forme d'une flèche (17) et **en ce que** la pointe de la flèche pointe vers le chariot de manutention (1).

3. Chariot de manutention selon la revendication 1 ou 2, **caractérisé en ce que** la surface de projection est constituée d'une pointe de flèche seule, notamment d'un triangle.

4. Chariot de manutention selon la revendication 3, **caractérisé en ce que** la surface de projection est constituée d'un triangle scalène.

5. Chariot de manutention selon la revendication 3 ou 4, **caractérisé en ce que** la surface de projection est constituée de deux lignes se rejoignant en forme de toit.

6. Chariot de manutention selon l'une quelconque des revendications 1 à 5, **caractérisé en ce que** la forme de la surface de projection (16) correspond à une ligne de contour de la face avant ou de la face arrière du chariot de manutention (1).

7. Chariot de manutention selon l'une quelconque des revendications 1 à 6, **caractérisé en ce que** la forme de la surface de projection correspond à une représentation réduite du contour du chariot de manutention.

8. Chariot de manutention selon la revendication 7, **caractérisé en ce que** la représentation du contour est une vue de dessus, notamment d'un chariot élévateur comportant des fourches de chargement dirigées vers l'avant.

9. Chariot de manutention selon la revendication 7, **caractérisé en ce que** la représentation du contour est une vue de côté, notamment d'un chariot élévateur comportant des fourches de chargement dirigées vers l'avant.

10. Chariot de manutention selon l'une quelconque des revendications 1 à 9, **caractérisé en ce que** la forme de la surface de projection (16) correspond aux lignes de contour de fourchons d'une fourche de chargement.

11. Chariot de manutention selon l'une quelconque des revendications 1 à 10, **caractérisé en ce que** l'effet de lumière est généré au moyen d'un laser (15).

12. Chariot de manutention selon l'une quelconque des revendications 1 à 11, **caractérisé en ce que** la forme de la surface de projection est générée au moyen d'un diaphragme et/ou d'un système de lentilles et/ou d'un réflecteur façonné de manière correspondante d'un projecteur.

13. Chariot de manutention selon l'une quelconque des revendications 1 à 12, **caractérisé en ce que** la forme de la surface de projection est générée au moyen d'une pluralité de sources de lumière et de leur agencement, notamment au moyen d'une pluralité de diodes électroluminescentes.

14. Chariot de manutention selon l'une quelconque des revendications 1 à 13, **caractérisé en ce que** la forme de la surface de projection est déterminée au moyen d'une séquence répétée d'une réduction de la distance par rapport au dispositif d'avertissement.

15. Chariot de manutention selon l'une quelconque des revendications 1 à 14, **caractérisé en ce que** la surface de projection (16) peut être focalisée sur la surface de la chaussée (18) à plusieurs distances du chariot de manutention (1).
